# EUROPEAN PATENT SPECIFICATION

(11) **EP 1 945 990 B1**
(45) Date of publication and mention of the grant of the patent: **11.05.2011**
(21) Application number: 05823943.5
(22) Date of filing: 07.11.2005
(51) Int. Cl.: F16L 47/30

(54) **CONNECTOR FOR LIQUID DELIVERING TAPS**
VERBINDER FÜR FLÜSSIGKEITSABGABEHÄHNE
RACCORD POUR ROBINET À LIQUIDES

(43) Date of publication of application: 23.07.2008
(73) Proprietor: Vitop Moulding S.R.L., 15100 Alessandria (IT)
(72) Inventor: NINI, Diego, I-15100 Alessandria (IT)
(74) Representative: Garavelli, Paolo
(86) International application number: PCT/IT2005/000645
(87) International publication number: WO 2007/052316

(56) References cited:
- EP-A- 1 469 246
- CA-A1- 2 275 117
- US-A- 5 697 650

## Description

The present invention refers to a connector, and in particular to a connector which allows connecting liquid-delivering taps to automatic tapping systems.

The above mentioned taps are commonly used when applied to liquid vessels, for example, but not in a limiting way, vessels of the "bag-in-box" type. When it is necessary to deliver liquids continuously, for example in stores where wine, beer, fruit juices, concentrated juices and the like are dispensed, it is necessary to arrange, in addition to the above mentioned normal taps for "bag in box" systems, devices which allow connecting such devices to other ones for the automatic and continuous delivery of such liquids towards delivering pipes placed downstreams: therefore, upstream of such delivering pipes, connectors are used which allow mutually communicating the dispensing tap with the downstream delivering pipes, also through pump systems connected to the connector.

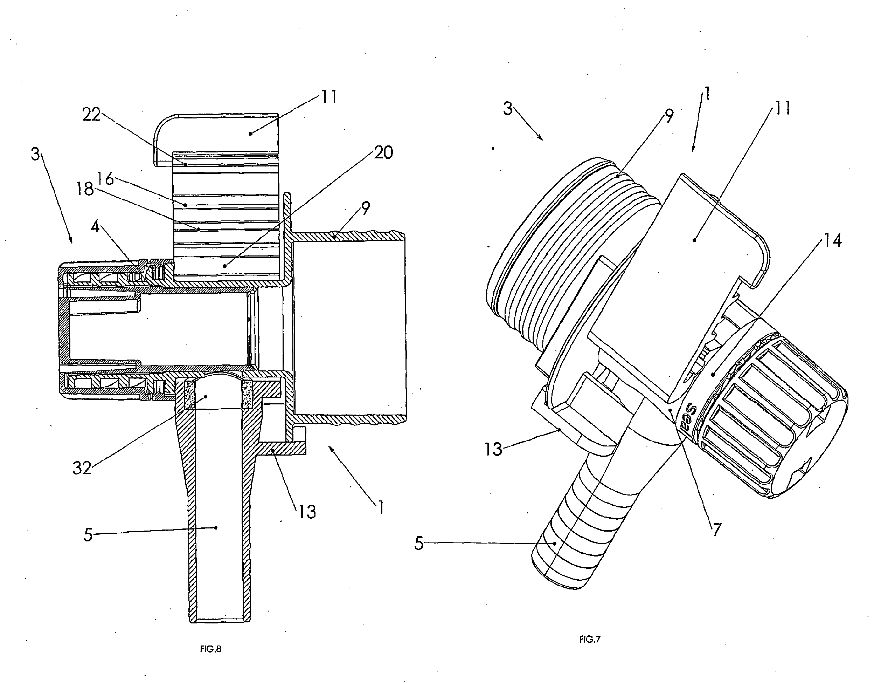

Such a connector, as can be well seen also in Figures 7 and 8, is adapted to receive the tap therein, to which it is then connected through a closure hinged onto the connector body. EP-A-1 469 246 discloses a device for coupling supports of valves, nozzles, jets or the like to fluid distribution pipes according to the preamble of Claim 1.

Currently known connectors, however, are not wholly satisfactory, due to two major reasons: first of all, they are composed of a high number of pieces (for example at least five pieces for known connectors) and are therefore complex, costly and lengthy to manufacture and assemble. Secondly, closing the tap body onto the connector body is performed through a bracket which abuts against the cylindrical tap body section, and exerts such a force as to generate offsets between tap and connector, and therefore brings about delivery problems and leakages of the delivered liquid. Moreover, in known connectors, it has been necessary to add a safety member and an overturning-preventing member to the bracket (thereby increasing the number of pieces of which the hinge is composed). In fact, without the safety member, when connecting/disconnecting the plastic pipe which connects the connector (and therefore the bag in box system) to the automatic dispenser, which is a step where the connector itself is highly stressed by the necessary force to connect and disconnect the pipe, the bracket hinge detaches itself.

Or, even worse, without the overturning-preventing member, the connector has no abutments on the tap, and therefore, even if connected, does not manage to become a single constrained system (tap + connector); therefore, when it is stressed for detaching the pipe, the various stresses along front, rear, right and left directions make the connector move with respect to the tap, complicating the pipe disconnecting action. Moreover, without the overturning-preventing member, it can happen that, not being well constrained onto the tap, a consumer manages, always upon disconnecting the pipe, to rotate the connector around the central tap axis.

Still more, also upon the initial connection of the connector, the connector itself can be connected in a wrong way (overturned) since, without the overturning-preventing member, a bad connection is allowed for the connector, which is placed with its major axis not perpendicular to the major tap axis. The importance of the overturning-preventing member is therefore clear: it enables the connector, once connected, to become a single piece with the tap.

Object of the present invention is solving the above mentioned prior art problems, by providing a connector which is realised in a very reduced number of parts in order to highly simplify its construction and consequently reduce the moulding and assembling cost, in addition to having a product which, being moulded with a minimum number of pieces, is more resistant to external stresses, being composed of a single block.

A further object of the present invention is providing a connector as mentioned above, whose closing bracket allows a much more accurate, safe and reliable tightening of the tap body with respect to similar closing members of prior connectors, and which is a single piece with the connector body through a particular and innovative geometry.

The above and other objects and advantages of the invention, as will appear from the following description, are obtained with a connector according to Claim 1. Preferred embodiments and non-trivial variations of the present invention are claimed in the dependent claims.

The present invention will be better described by some preferred embodiments thereof, provided as a nonlimiting example, with reference to the enclosed drawings, in which:

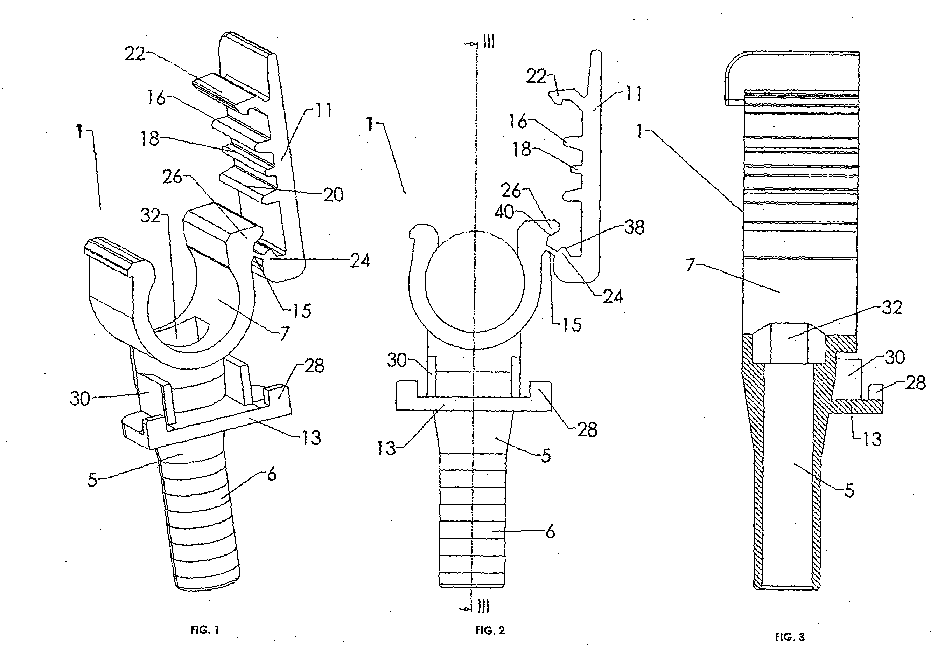

- Figure 1 is a perspective view of a preferred embodiment of the connector of the present invention in an open position;
- Figure 2 is a front view of the connector in Fig. 1;
- Figure 3 is a sectional view performed along line III-III in Fig. 2;

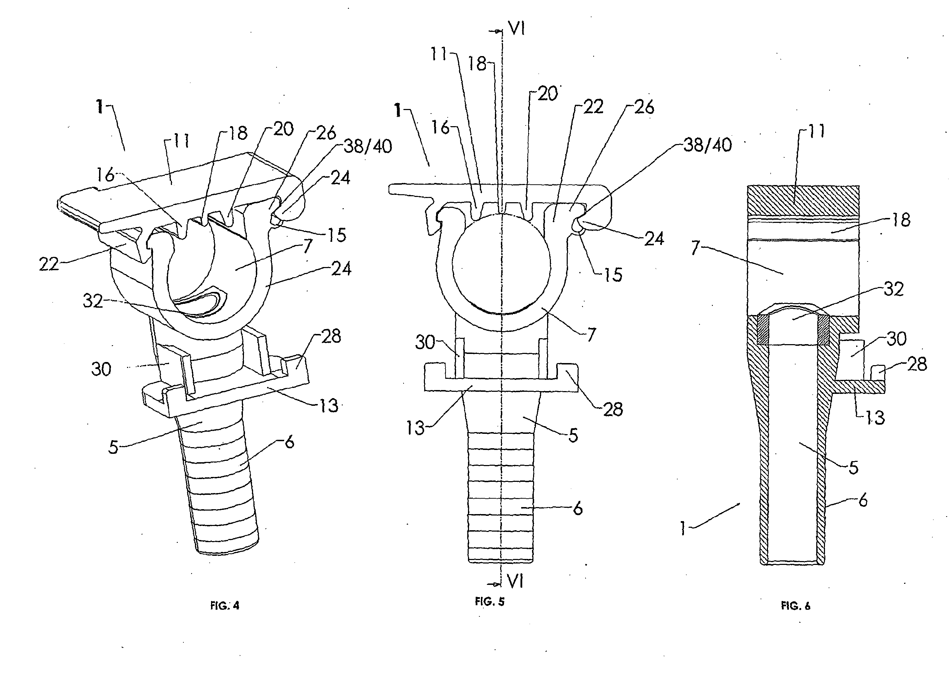

- Figure 4 is a perspective view similar to Fig. 1 but with the connector in a closed position;
- Figure 5 is a front view of the connector in Fig. 4;
- Figure 6 is a sectional view performed along line VI-VI in Fig. 5;
- Figure 7 is a perspective view of the connector in Fig. 1 coupled with a tap;
- Figure 8 is a side sectional view of the connector-tap assembly in Fig. 7; and
- Figure 9 is an exploded view of a version of the connector made of three pieces which is not part of the invention.

With reference to the Figures, a preferred embodiment of the connector of the present invention is shown and described. It will be immediately obvious to a skilled person in the art that numerous variations and modifications (for example related to shape, sizes and parts with equivalent functionalities) could be made to the described connector, without departing from the scope of the invention as defined by the enclosed claims.

According to the Figures, a preferred, but not limiting, embodiment of the connector 1 for taps 3 is shown (shown as an example in Fig. 7 and 8 with a small tap 4 and a body 9) for delivering liquids (such as wine, beer, fruit juices, concentrated juices, etc.) of the present invention. Such a connector 1 substantially comprises:
- a support body 5 equipped with an upper housing 7 substantially shaped as a "U", adapted to receive therein the body 9 of the tap 3 (the body 9 is elastically engaged by the arms of the "U", which laterally embrace it); the support body 5 has a hollow, elongated tubular shape and is equipped with an external toothed surface 6 adapted to allow it to engage a flexible pipe (not shown) placed downstream;

- a closing bracket 11 adapted to be connected to the support body 5 and adapted to close the housing 7 on an upper part thereof for securing the body 9 of the tap 3 inside the housing 7; and
- an overturning-preventing member 13 adapted to prevent the tap 3 from detaching from the connector 1.

One of the major features of the connector 1 of the invention, first of all, is that it is moulded in a single piece, thereby avoiding the complex and costly configurations of prior art connectors.

The other major features of the connector 1 of the invention further are that the closing bracket 11 is hinged as a single piece to the housing 7, through film-shaped hinge means 15, which connect the two head ends; such film-shaped hinge is of such a length as to allow a certain limited offset between closing bracket 11 and body 9. Moreover, the bracket 11 is equipped with:
- a plurality of thrusting means 16, 18, 20 adapted to press the body 9 of the tap 3 against the housing 7;
- at least one tooth 22 for anchoring to the housing 7 upon closing the bracket 11 above the housing 7; and
- at least one angular guide 24 adapted to cooperate with a corresponding guide 26 obtained on the housing 7 in order to make an angular oscillation guide around a stable axis on the support body 5 and to allow the unmovable closure of the bracket 11 above the housing 7.

For the particular practical configuration, the hinge means 15, when the connector 1 is in its closing position, has no carrier function: the closing effort only acts on the angular guide outlines 24, 26, and the hinge 15 has a suitable length such that, when rotating, the angular guides 24, 26 are perfectly coupled one to the other.

In particular, as shown, the thrusting means 16, 18, 20 are composed of a first 16, a second 18 and a third 20 thrusting tooth, such teeth being oriented towards the housing 7 interior, and are adapted to axially press, towards the connector 1 interior, the body 9 of the tap 3, after having inserted the body 9 inside the housing 7.

In order to realise an optimum seal without damaging the body 9 of the tap 3, such thrusting teeth 16, 18, 20 are preferably made of soft plastic material, which is the same material of which the whole connector is made. The teeth has rounded-shape bits and the central tooth bit is straight, while the two side bits have a pre-established slanting in order to optimally thrust and do not generate a peak bit load.

In particular, as can be seen from the Figures, the anchoring tooth 22 has such a geometry as to allow its flexure when opening and closing through a cooperation between its angular outline 38 and the undercut 40 obtained on the external surface of the housing 7.

As further innovative characteristics, the connector 1 of the invention can further be equipped with at least one overturning-preventing notch 28 and with at least one spacer and overturning-preventing-notch 30, both placed on the overturning-preventing member 13, adapted to align the outlet hole of the tap 3 with the delivering hole of the support body 5 of the connector 1, and adapted to prevent the tap 3 from being overturned from the connector 1 once they have been connected together.

As further innovation of the connector 1, in order to guarantee a complete seal for the delivered liquid, the connector 1 itself further comprises at least one sealing valve 32 placed in the part which joins together the support body 5 and the housing 7.

The inventive connector 1 can be realised with a very small number of parts, in practice the support body 5 with housing 7 and bracket 11 in a single piece, and the sealing valve 32.

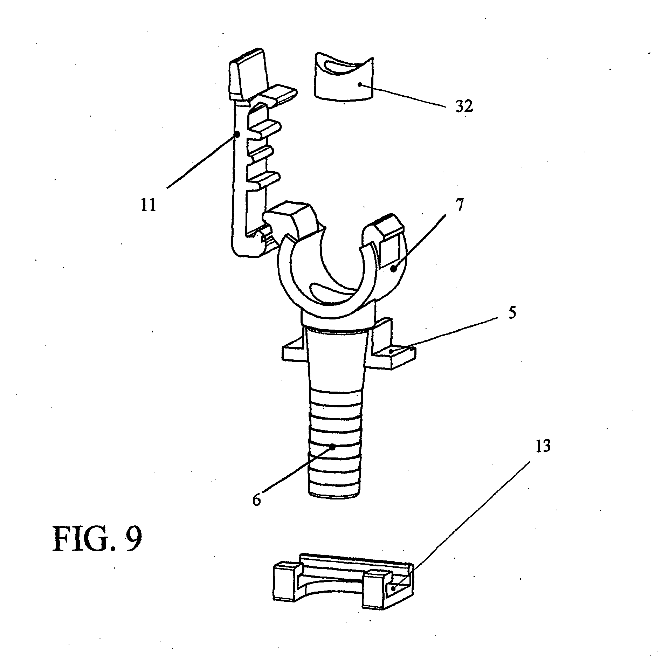

It is obviously, possible to provide for other processes, not part of the invention, with which the connector is made of three parts, mutually separating body 5, valve 32 and overturning-preventing member 13, as better shown in the exploded view of Fig. 9, but this still allows saving a lot on the number of end parts, with respect to prior art connectors.

## Claims

1. Connector (1) for liquid-delivering taps (3), comprising a connector body consisting of:
- a support body (5) equipped with an upper housing (7) substantially shaped as a "U", adapted to receive therein a body (9) of said tap (3);
- a closing bracket (11) adapted to be connected to said support body (5) and adapted to close said housing (7) on an upper part thereof for securing the body (9) of the tap (3) inside said housing (7); and
- an overturning-preventing member (13) adapted to prevent the tap (3) from being detached from the connector (1);
wherein said closing bracket (11) is hinged as a single piece, through film-shaped hinge means (15), to said housing (7), said bracket (11) being equipped with:
• a plurality of thrusting means (16, 18, 20) adapted to press the body (9) of the tap (3) against said housing (7);
• at least one tooth (22) for anchoring to said housing (7) when closing said bracket (11) above said housing (7); and
• at least one angular guide (24) adapted to cooperate with a corresponding guide (26) obtained on said housing (7) in order to make an angular oscillation guide around a stable axis on the body (5) and to allow unmovably closing said bracket (11) above said housing (7);
**characterised in that** said connector body is moulded in a single piece.

2. Connector (1) according to claim 1, **characterised in that** said thrusting means (16, 18, 20) are composed of a first (16), a second (18) and a third (20) thrusting tooth, said teeth being oriented towards an interior of said housing (7), and being adapted to axially press, towards an interior of the connector (1), the body (9) of the tap (3), after having inserted the body (9) inside the housing (7).

3. Connector (1) according to claim 2, **characterised in that** said thrusting teeth (16, 18, 20) are made of soft plastic material.

4. Connector (1) according to claim 1, **characterised in that** said anchoring tooth (22) has such a geometry as to allow its flexure when opening and closing through its cooperation between its angular outline (38) and an undercut (40) obtained on an external surface of said housing (7).

5. Connector (1) according to claim 1, **characterised in that** it is further equipped with at least one overturning-preventing notch (28) and at least one spacer and overturning-preventing notch (30), both notches being placed on said overturning-preventing member (13), and being adapted to align an outlet hole of the tap (3) with a hole of the support body (5) of the connector (1), and adapted to prevent the tap (3) from being overturned from the connector (1) once they have been connected together.

6. Connector (1) according to claim 1, **characterised in that** it further comprises at least one sealing valve (32) placed in a part joining the support body (5) and the housing (7).

## Patentansprüche

1. Behälter (1) für Hähne (3) für die Versorgung mit Flüssigkeiten mit einem Behälterkörper aus:
- einem tragenden Körper (5), der mit einer oberen, grundlegend "U-förmigen" Aufnahme (7) ausgestattet ist, die dazu dient, den Körper (9) des genannten Hahns (3) aufzunehmen;
- einem Verschlussbügel (11), der dazu dient, mit dem genannten tragenden Körper (5) verbunden zu werden und die genannte Aufnahme (7) oben zu schließen, um den Körper (9) des Hahns (3) in der genannten Aufnahme (7) zu befestigen; und
- einem Kippschutzelement (13), das dazu dient, die Lösung des Hahns (3) vom Behälter (1) zu verhindern;
in dem der genannte Verschlussbügel (11) aus einem Stück durch Filmscharniere (15) mit der genannten Aufnahme (7) beweglich verbunden ist, der genannte Bügel (11) ist folgendermaßen ausgestattet:
• mit mehreren Druckvorrichtungen (16, 18, 20), die dazu dienen, den Körper (9) des Hahns (3) an die genannte Aufnahme (7) zu drücken;
• mit mindestens einem Zahn (22) zur Verankerung an der genannten Aufnahme (7) in der Verschlussphase des genannten Bügels (11) über der genannten Aufnahme (7); und
• mit mindestens einem Gelenkbogen (24), der dazu dient, mit einer entsprechenden Führung (26) an der genannten Aufnahme (7) zusammenzuarbeiten, sodass ein schwenkender Gelenkbogen um eine stabile Achse auf dem Körper (5) realisiert und der unlösbare Verschluss des genannten Bügels (11) über der genannten Aufnahme (11) ermöglicht wird;
und **dadurch gekennzeichnet ist, dass** der genannte Körper des Verbinders aus einem einzigen Körper gepresst wird.

2. Verbinder (1) gemäß Patentanspruch 1, der **dadurch gekennzeichnet ist, dass** die genannten Druckvorrichtungen (16, 18, 20) aus einem ersten (16), einem zweiten (18) und einem dritten (20) Druckzahn bestehen, zur Innenseite der genannten Aufnahme (7) ausgerichtet sind, und dazu dienen, den Körper (9) des Hahns (3) in axialer Richtung zur Innenseite des Verbinders (1) zu komprimieren, nachdem der Körper (9) in die Aufnahme (7) eingeführt wurde.

3. Verbinder (1) gemäß Patentanspruch 2, der **dadurch gekennzeichnet ist, dass** die genannten Druckzähne (16, 18, 20) aus weichem Kunststoff realisiert sind.

4. Verbinder (1) gemäß Patentanspruch 1, der **dadurch gekennzeichnet ist, dass** der genannte Verankerungszahn (22) eine Geometrie hat, die die Biegung bei der Öffnung und Schließung durch die Zusammenarbeit zwischen ihrem Winkelprofil (38) und einer Vertiefung (40) an der Außenfläche der genannten Aufnahme (7) ermöglicht.

5. Verbinder (1) gemäß Patentanspruch 1, der **dadurch gekennzeichnet ist, dass** er außerdem mit mindestens einer Kippschutzkerbe (28) und mit mindestens einer Distanz- und einer Kippschutzkerbe (30) ausgestattet ist, die beide am genannten Kippschutzelement (13) angebracht sind und dazu dienen, die Ausgangsbohrung des Hahns (3) mit der Bohrung des tragenden Körpers (5) des Behälters (1) auszurichten, und dazu dienen, das Kippen des Hahns (3) aus dem Behälter (1) zu verhindern, nachdem diese miteinander verbunden wurden.

6. Verbinder (1) gemäß Patentanspruch 1, der **dadurch gekennzeichnet ist, dass** er außerdem mindestens ein Dichtventil (32) einschließt, das im Verbindungsstück zwischen dem tragenden Körper (5) und der Aufnahme (7) angebracht ist.

## Revendications

1. Connecteur (1) pour robinets (3) distributeurs de liquides, comprenant un corps connecteur qui consiste en:
- un corps de support (5) doté d'un logement supérieur (7) substantiellement en forme de "U", apte à recevoir à l'intérieur le corps (9) du dit robinet (3);
- une bride de fermeture (11) apte à être raccordée au dit corps de support (5) et apte à fermer la partie supérieure dudit logement (7) pour fixer le corps (9) du robinet (3) dans ledit logement (7); et
- un élément anti-basculement (13) apte à empêcher le détachement du robinet (3) du connecteur (1);
dans ladite bride de fermeture (11) est fixé par charnière à pièce, au moyen de charnière à film (15) au dit logement (7), ladite bride (11) étant dotée de :
• une pluralité de moyens de poussée (16, 18, 20) aptes à appuyer le corps (9) du robinet (3) contre ledit logement (7);
• au moins une dent (22) d'ancrage au dit logement (7) en phase de fermeture de ladite bride (11) sur le dit logement (7); et
• au moins une glissière angulaire (24) apte à coopérer avec une glissière correspondante (26) obtenue sur ledit logement (7) de façon à réaliser une glissière angulaire d'oscillation autour d'un axe stable sur le corps (5) et à permettre la fermeture inamovible de ladite bride (11) sur ledit logement (11);
**caractérisé par le fait que** ledit corps de connecteur est imprimé dans un unique corps.

2. Connecteur (1) selon la revendication 1, **caractérisé par le fait que** lesdits moyens de poussée (16, 18, 20) sont constitués par une première (16), une seconde (18) et une troisième (20) dent de poussée orientées vers l'intérieur du dit logement (7), et aptes à comprimer en sens axial vers l'intérieur du connecteur (1) le corps (9) du robinet (3), après avoir inséré le corps (9) dans le logement (7).

3. Connecteur (1) selon la revendication 2, **caractérisé par le fait que** les dites dents de poussée (16, 18, 20) sont réalisées en matière plastique souple.

4. Connecteur (1) selon la revendication 1, **caractérisé par le fait que** ladite dent d'ancrage (22) a une géométrie telle à permettre sa flexion en ouverture et fermeture au moyen de coopération entre son profil angulaire (38) et un creux (40) obtenu sur la surface externe dudit logement (7).

5. Connecteur (1) selon la revendication 1, **caractérisé par** le fait d'être doté en outre d'au moins une encoche anti-basculement (28) et d'au moins une encoche entretoise et d'anti-basculement (30), toutes deux placées sur ledit élément anti-basculement (13), aptes à aligner le trou de sortie du robinet (3) avec le trou du corps de support (5) du connecteur (1), et aptes à empêcher le basculement du robinet (3) du connecteur (1) une fois qu'ils ont été raccordés ensemble.

6. Connecteur (1) selon la revendication 1, **caractérisé par** le fait de comprendre en outre au moins une valve de tenue (32) placée dans la partie d'union entre le corps de support (5) et le logement (7).
